# EUROPÄISCHE PATENTSCHRIFT

(11) **EP 0 875 979 B1**
(45) Veröffentlichungstag und Bekanntmachung des Hinweises auf die Patenterteilung: **27.06.2001**
(21) Anmeldenummer: 98107793.6
(22) Anmeldetag: 29.04.1998
(51) Int. Cl.: H02K 3/52

(54) **Elektromotor mit einer Halterung für die Statorwicklung**
Electrical motor with attachment device for the stator winding
Moteur électrique avec une fixation pour l'enroulement de stator

(30) Priorität: 02.05.1997 DE 19718501
(43) Veröffentlichungstag der Anmeldung: 04.11.1998
(73) Patentinhaber: FHP Motors GmbH, 26133 Oldenburg (DE)
(72) Erfinder: Appeldorn, Alfred, 26209 Hatten (DE); Johannes, Jörg, 26125 Oldenburg (DE)
(74) Vertreter: HOFFMANN - EITLE

(56) Entgegenhaltungen:
- EP-A- 0 515 782
- EP-A- 0 613 227
- DE-C- 3 519 063
- DE-U- 1 884 953
- US-A- 3 913 187

## Beschreibung

Die Erfindung betrifft einen Elektromotor mit einer Haltevorrichtung für die Statorwicklung der im Oberbegriff des Patentanspruchs 1 angegebenen Art.

Es gibt verschiedene Verfahren, um die Wickelköpfe in elektrischen Maschinen zu schützen. Eine der gebräuchlichsten Verfahren ist das Bandagieren, wobei die Wickelköpfe durch Umschlingen mit Baumwollband, Glasseide, Schnur oder dergleichen von Hand oder maschinell fest zusammengeschnürt werden. Bei der maschinellen Herstellung von Motoren wird dabei in der Regel so vorgegangen, daß die z. B. in einem Stator eingezogenen Wicklungen im Bereich des stirnseitig über das Statorblechpaket vorstehenden Wickelköpfe vorgeformt werden, dann das Bandagieren folgt und schließlich ein zweiter Preß- und Formvorgang die bandagierten Wickelköpfe noch genau ausrichtet. Ein Nachteil besteht darin, daß die Form- und Bandagiervorgänge nacheinander stattfinden. Dabei federn die vorgeformten Wickelköpfe infolge Eigenelastizität teilweise wieder auf, bevor sie bandagiert werden, lassen sich dann nicht festgepackt umschnüren und lockern sich durch das Nachformen in der Bandage weiter, so daß während des späteren Betriebes des Motors Eigenbewegungen und Schwingungen einzelner Drähte möglich sind, die dann zum Bruch führen können.

Eine Verbesserung der Halterung der Kabelbinder wurde dadurch erzielt, daß die Wicklungsteile des Wickelkopfes durch einen laschenartigen, verrastbaren Kabelbinder festgelegt wurden (CH-PS 587 579). Obwohl dieser Kabelbinder beim Festlegen der Wicklungsteile selbsttätig verrastet, kann dieser später noch seitlich verrutschen, wodurch einzelne Drähte lose werden und in Schwingungen geraten können. Durch eine Tränkung des Wickelkopfes mit dem Kabelbinder wird dieses Verrutschen zwar verhindert, aber es ist ein zusätzlicher Arbeitsgang erforderlich. Hierzu wird die Herstellung der elektrischen Maschine zusätzlich verteuert.

Weiterhin ist durch die US-A 39 13 187 eine Haltevorrichtung für einen Bündel von Kabeln bekannt, die folgende Merkmale enthält: ein Halteclip mit zwei kreisförmigen Halbschalen, eine erste Halbschale mit Rastmitteln an einem Ende und einem Filmscharnier an dem anderen Ende, und eine zweite mit der ersten Halbschale durch den Filmscharnier verbundenen Halbschale, dessen freies Ende Rastmittel aufweist, die mit der ersten Halbschale verrastbar sind.

Weiterhin ist aus der DE-OS 41 17 905 eine Haltevorrichtung der eingangs genannten Art bekannt. Dort werden die Wicklungsdrähte der über die Stirnfläche des Statorblechpaketes hinausragenden Wickelköpfe durch laschenartige Kabelbinder zusammengehalten. Diese Kabelbinder weisen zwischen ihren Rastverzahnungen und Verschlußelementen Sperrstege auf, welche in die Fenster zwischen den Spulen und den Stirnflächen der Statorblechpakete einschieb- und verkeilbar sind. Hierdurch wird zwar ein Verrutschen der verrasteten Kabelbinder sicher verhindert, aber die Befestigung der Kabelbinder kann nicht von einem Automaten durchgeführt werden.

Aus dem DE-GM 18 84 953 ist eine Haltevorrichtung für eine Wicklung eines Stators eines Elektromotors bekannt, mit einer um den Wickelkopf herumgelegten Haltelasche, durch welche die einzelnen Windungen der Wicklung zusammengehalten werden und der Wickelkopf geformt wird. Die Herstellung einer Haltelasche kann durch einfaches Ineinanderstecken der Enden einer Bandschleife erfolgen.

Die DE 43 05 936 C2 offenbart eine Haltevorrichting für eine Wicklung eines Stators eines Elektromotors, wobei eine den Wicklungskopf umschließende Haltelasche vorgesehen ist. Die Haltelasche ist hierbei flexibel ausgebildet und weist an ihrem freien Ende hintereinander angeordnete Rastelemente auf.

Der Erfindung liegt die Aufgabe zugrunde, einen Elektromotor mit einer Haltevorrichtung für die Statorwickelköpfe zu schaffen, der die oben genannten Nachteile vermeidet und bei dem die Haltevorrichtung durch einen Automaten leicht anzubringen ist. Diese Aufgabe wird durch die Merkmale im Patentanspruch 1 gelöst.

Der erfindungsgemäße Elektromotor ermöglicht eine einfache, billige und sichere Festlegung der Windungen von Wickelköpfen, die durch einen Automaten vorgenommen werden kann.

Der Halteclip gewährleistet einen sicheren Halt der Wickelköpfe gegen Beschädigung. Weitere vorteilhafte Ausgestaltungen des Erfindungsgegenstandes sind den Unteransprüchen zu entnehmen. Die Erfindung wird anhand eines Ausführungsbeispieles im folgenden näher beschrieben.

Es zeigen:
- Figur 1: einen Elektromotor mit einem Halteclip,
- Figur 2: eine Einzelheit aus Figur 1 mit noch geöffnetem Halteclip,
- Figur 3: eine Einzelheit aus Figur 1 mit geschlossenem Halteclip,
- Figur 4: den Halteclip vor dem Einbau in den Elektromotor,
- Figur 5: eine Draufsicht auf den Rastnocken und
- Figur 6: einen Querschnitt durch eine Halbschale

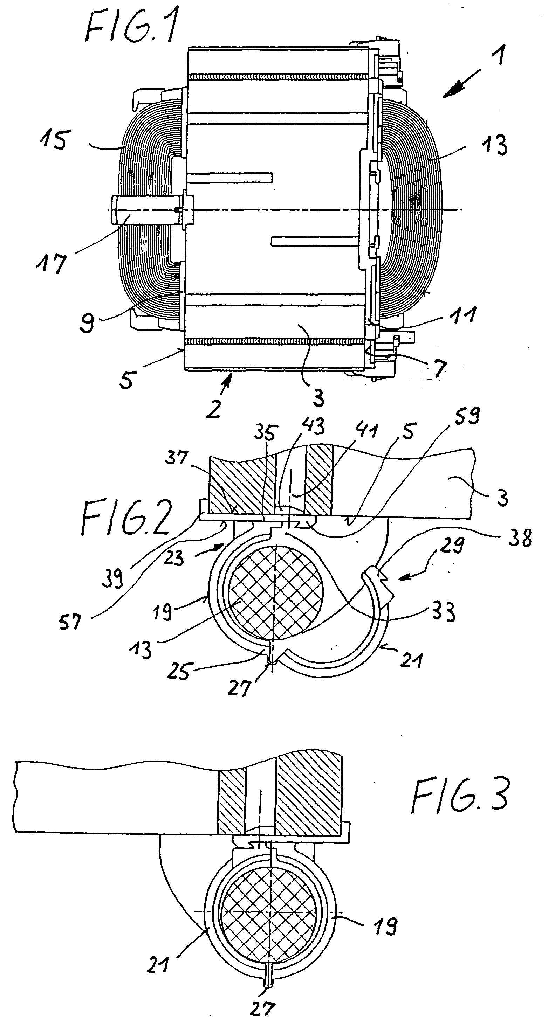

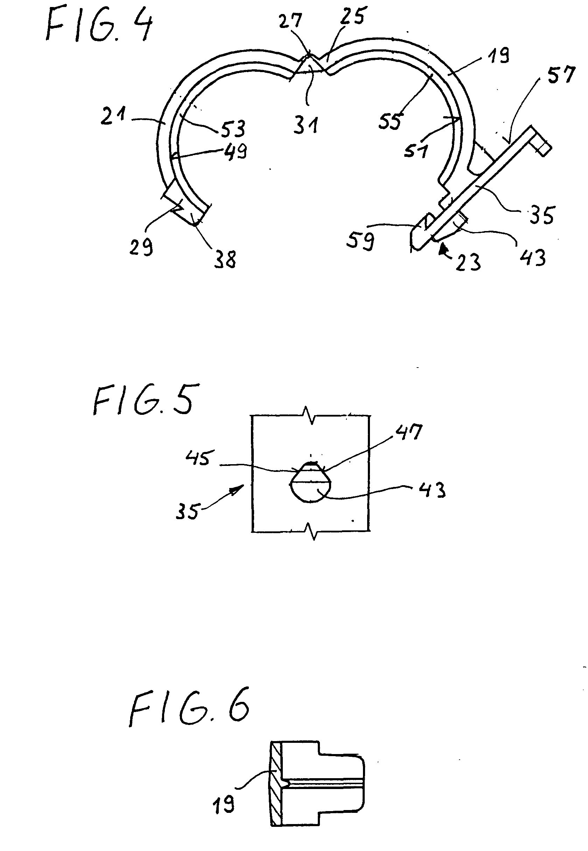

Die Figur 1 zeigt eine Draufsicht auf einen Elektromotor 1 mit einem Stator 2 und einem Statorblechpaket 3, an dessen Stirnflächen 5, 7 aus Isolierstoff bestehende Endscheiben 9, 11 befestigt sind. Die Windungen der Wickelköpfe 13, 15 der Statorwicklungen werden durch eine Haltevorrichtung mit einem Halteglied zusammengehalten, wodurch die Wickelköpfe 13, 15 geformt und gegen Beschädigung geschützt werden. Dieses Halteglied ist mittels Rastmittel mit der Stirnfläche 5 bzw. 7 des Statorblechpaketes 3 fest verbindbar und ist ein Halteclip 17 mit zwei die Wickelköpfe 13, 15 unschließenden Halbschalen 19, 21. Das eine Ende 23 der ersten, halbkreisförmig ausgebildeten Halbschale 19 ist an der Stirnfläche 5, 7 des Statorblechpaketes 3 fest angeordnet, während das andere Ende 25 über ein als Schwenkachse dienendes Filmscharnier 27 mit der zweiten Halbschale 21 verbunden ist. Eine feste Halterung der Wicklungsköpfe 13, 15 wird dadurch geschaffen, daß das freie Ende 29 der zweiten Halbschale 21 Rastmittel zum Verrasten mit der ersten Halbschale 19 aufweist. Vorzugsweise besteht der Halteclip 17 aus einem Kunststoffspritzteil, das bei der Herstellung einen die beiden Halbschalen 19, 21 in einer geöffneten Stellung haltenden Verbindungssteg 31 aufweist, siehe Figur 4. Um das Verschwenken der zweiten Halbschale 21 in die Raststellung mit der ersten Halbschale 19 zu ermöglichen, wird der Verbindungssteg 31 eingeschnitten oder sogar ganz herausgeschnitten. Der Verbindungssteg 31 hat eine dreieckige Form, wobei das Ein- bzw. das Ausschneiden bei der Montage des Halteclips 17 durch den Montageautomaten automatisch erledigt wird.

Das Befestigen des Halteclips 17 an der Stirnfläche 5, 7 des Statorblechpaketes 3 erfolgt einfach dadurch, daß das mit der Stirnfläche 5, 7 verbindbare Ende 23 der ersten Halbschale 19 einen in den Zwischenraum 33 zwischen der Stirnfläche 5, 7 des Statorblechpaketes 3 und der Wickelköpfe 13, 15 einschiebbaren Befestungssteg 35 aufweist. Dieser Befestigungssteg 35 ist mit Rastmitteln zum Verrasten des Halteclips 17 an dem Statorblechpaket 3 und einer Rastnase 38 an dem freien Ende 29 der zweiten Halbschale 21 versehen. Die Montage des Halteclips 17 erfolgt dadurch, daß die erste Halbschale 19 mittels einer Gleitfläche 37 an dem Befestigungssteg 35 von außen radial nach innen auf der Stirnfläche 5, 7 des Statorblechpaketes 3 in die Raststellung durch einen Automaten geschoben wird. Dieses radiale Einschieben wird vorteilhaft dadurch begrenzt, daß der Befestigungssteg 35 einen senkrecht zu der Gleitfläche 37 angeordneten Endanschlag 39 aufweist.
Ein sicheres Verrasten des Halteclips 17 an dem Statorblechpaket 3 wird dadurch gewährleistet, daß eine Rastöffnung 41, die z. B. eine Rastbohrung sein kann, in die Stirnfläche 5, 7 des Statorblechpaketes 3 mündet, in die ein gegenüber der Gleitfläche 37 vorstehend angeordneter Rastnocken 43 an dem Halteclip 17 einrastbar ist.
Vorteilhaft ist hierbei der Rastnocken 43 mit in Schieberichtung durch den Automaten wirksamen Einlaufschrägen 45, 47 versehen, siehe Figur 5. Eine sichere Formung der Wickelköpfe 13, 15 wird dadurch begünstigt, daß die beiden Halbschalen 19, 21 auf ihren als Klemmflächen dienendes Innenumfangsflächen 49, 51 je eine vorstehend ausgebildete, umlaufende Ringfläche 53, 55 aufweisen. In weiterer Ausbildung ist der Befestigungssteg 35 an seiner dem Wickelkopf 13, 15 zugewandten Seite 57 mit einem Rasthaken 59 versehen, hinter welchem die an dem freien Ende 29 der zweiten Halbschale 21 angeordnete Rastnase 38 verrastbar ist.

In vorteilhafter Ausgestaltung kann der Halteclip 17 noch Arretierelemente zum Fixieren von elektrischen Komponenten wie Widerstände, Thermoelemente, elektrische Verbindungsdrähte etc. aufweisen.

## Patentansprüche

1. Elektromotor mit einer Haltevorrichtung für die Statorwicklung wobei die Haltevorrichtung ein den Wickelkopf formendes, umfassendes und haltendes Halteglied aufweist und wobei das Halteglied mittels Rastmittel mit der Stirnfläche des Statorblechpaketes fest verbindbar ist, **dadurch gekennzeichnet,** daß das Halteglied aus einem Halteclip (17) mit zwei kreisförmigen Halbschalen (19, 21) besteht, von welchen das eine Ende (23) der ersten Halbschale (19) mittels Rastmittel an der Stirnfläche (5, 7) des Statorblechpaketes (3) fest verrastbar ist und das andere Ende (25) über ein als Schwenkachse dienendes Filmscharnier (27) mit der zweiten Halbschale (21) verbunden ist, und daß das freie Ende (29) der zweiten Halbschale (21) Rastmittel zum Verrasten mit der ersten Halbschale (19) aufweist.

2. Elektromotor nach Anspruch 1, **dadurch gekennzeichnet**, daß der Halteclip (17) aus einem Kunststoffspritzteil besteht und bei der Herstellung einen die beiden Halbschalen (19, 21) in einer geöffneten Stellung haltenden Verbindungssteg (31) aufweist, welcher bei der Montage des Halteclips (17) durch einen Automaten eingeschnitten bzw. ausgeschnitten wird, derart, daß die beiden Halbschalen (19, 21) zueinander in die Raststellung bringbar sind.

3. Elektromotor nach Anspruch 2, **dadurch gekennzeichnet**, daß der Verbindungssteg (31) dreieckförmig ausgebildet ist.

4. Elektromotor nach Anspruch 1, 2 oder 3, **dadurch gekennzeichnet**, daß das mit der Stirnfläche (5, 7) des Statorblechpaketes (3) verbindbare Ende (23) der ersten Halbschale (19) einen in den Zwischenraum (33) zwischen der Stirnfläche (5, 7) des Statorblechpaketes (3) und der Wicklungsköpfe (13, 15) einschiebbaren Befestigungssteg (35) aufweist, an welchem die Rastmittel zum Befestigen des Halteclips (17) an dem Statorblechpaket (3) und zum Verrasten einer Rastnase (35) an dem freien Ende (29) der zweiten Halbschale (21) aufweist.

5. Elektromotor nach Anspruch 4, **dadurch gekennzeichnet**, daß die erste Halbschale (19) mittels einer Gleitfläche (37) an dem Befestigungssteg (35) von außen radial nach innen auf der Stirnfläche (5, 7) des Statorblechpaketes (3) in die Raststellung durch einen Automaten schiebbar ist.

6. Elektromotor nach Anspruch 5, **dadurch gekennzeichnet**, daß der Befestigungssteg (35) einen senkrecht zu der Gleitfläche (37) angeordneten Endanschlag (39) aufweist, durch den die Verschiebebewegung des Halteclips (17) auf der Stirnfläche (5, 7) des Statorblechpaketes (3) radial begrenzbar ist.

7. Elektromotor nach Anspruch 5 oder 6, **dadurch gekennzeichnet**, daß in die Stirnfläche (5, 7) des Statorblechpaketes (3) eine Rastöffnung (41) mündet, in die ein gegenüber der Gleitfläche (37) vorstehend angeordneter Rastnocken (43) an dem Halteclip (17) einrastbar ist.

8. Elektromotor nach einem der vorhergehenden Ansprüche, **dadurch gekennzeichnet**, daß die beiden Halbschalen (19, 21) auf ihren als Klemmflächen dienenden Innenumfangsflächen (49, 51) je eine vorstehende, umlaufende Ringfläche (53, 55) aufweisen.

9. Elektromotor nach einem der vorhergehenden Ansprüche, **dadurch gekennzeichnet**, daß der Befestigungssteg (35) an seiner dem Wicklungskopf (13, 15) zugewandten Seite (57) einen Rasthaken (59) aufweist, hinter welchem die an dem freien Ende (29) der zweiten Halbschale (21) angeordnete Rastnase (38) verrastbar ist.

10. Elektromotor nach einem der vorhergehenden Ansprüche, **dadurch gekennzeichnet**, daß der Halteclip (17) angespritzte Rasterelemente zum Fixieren von elektrischen Komponenten wie Widerstände, Thermoelemente, Verbindungskabel etc.aufweist.

## Revendications

1. Moteur électrique avec un dispositif de fixation pour l'enroulement de stator, le dispositif de fixation présentant un organe de maintien, conformant, entourant et maintenant la tête d'enroulement, et l'organe de maintien étant susceptible d'être relié rigidement, à l'aide de moyens d'encliquetage, à la face frontale du paquet de tôles de stator, caractérisé en ce que l'organe de maintien est constitué d'une attache de maintien (17) munie de deux demi-coques (19, 21) à forme circulaire, dont une première extrémité (23) de la première demi-coque (19) est susceptible d'être encliquetable rigidement, à l'aide de moyens d'encliquetage, sur la face frontale (5, 7) du paquet de tôles de stator (3), et l'autre extrémité (25) est relié à la deuxième demi-coque (21), par l'intermédiaire d'un film-charnière (27) servant d'axe de pivotement, et en ce que l'extrémité libre (29) de la "deuxième" demi-coque (21) présente des moyens d'encliquetage pour assurer l'encliquetage à la première demi-coque (19).

2. Moteur électrique selon la revendication 1, caractérisé en ce que l'attache de maintien (17) est constituée d'une pièce moulée par injection en matière synthétique et, lors de la fabrication, reçoit une nervure de liaison (31) maintenant les demi-coques (19, 21) en position ouverte, nervure qui, lors du montage de l'attache de maintien (17),'est susceptible d'être entaillée ou découpée à l'aide d'un dispositif automatisé, de manière que les deux demi-coques (19, 21) soient susceptible d'être placées l'une envers l'autre à la position d'encliquetage.

3. Moteur électrique selon la revendication 2, caractérisé en ce que la nervure de liaison (31) est de configuration triangulaire.

4. Moteur électrique selon la revendication 1, 2 ou 3,
caractérisé en ce que l'extrémité (23), susceptible d'être reliée à la face frontale (5, 7) du paquet de tôles de stator (3), de la première demi-coque (19) présente une nervure de fixation (35), susceptible d'être insérée dans l'espace intermédiaire (33) existant entre la face frontale (5, 7) du paquet de tôles de stator (3) et les têtes d'enroulement (13, 15), la nervure de fixation présentant les moyens d'encliquetage prévus pour fixer l'attache de maintien (17) sur le paquet de tôle de stator (3) et pour assurer l'encliquetage d'un ergot d'encliquetage (35) sur l'extrémité libre (29) de la deuxième demi-coque (21).

5. Moteur électrique selon la revendication 4,
caractérisé en ce que la première demi-coque (19) est susceptible d'être coulissée à la position d'encliquetage à l'aide d'un dispositif automatisé, au moyen d'une surface de glissement (37) aménagée sur la nervure de fixation (35), depuis l'extérieur, radialement vers l'intérieur sur la face frontale (5, 7) du paquet de tôles de stator (3).

6. Moteur électrique selon revendication 5, caractérisé en ce que la nervure de fixation (35) présente une butée d'extrémité (39), disposée perpendiculairement par rapport à la surface de glissement (37), butée au moyen de laquelle le déplacement de coulissement de l'attache de maintien (17), sur la face frontale (5, 7) du paquet de tôle (3), est susceptible d'être limité radialement.

7. Moteur électrique selon la revendication 5 ou 6,
caractérisé en ce que, dans la face frontale (5, 7) du paquet de tôle de stator (3) débouche une ouverture d'encliquetage (41), dans laquelle un ergot d'encliquetage (43), disposé en saillie par rapport à la face de glissement (37), est susceptible d'être encliqueté sur l'attache de maintien (17).

8. Moteur électrique selon l'une des revendications précédentes, caractérisé en ce que les deux demi-coques (19, 21) présentent une face annulaire (53, 55) de pourtour en saillie, sur chacune de leur face périphérique intérieure (49, 51) servant de face de serrage.

9. Moteur électrique selon l'une des revendications précédentes, caractérisé en ce que la nervure de fixation (35) présente sur sa face (57), tournée vers la tête d'enroulement (13, 15), un crochet d'encliquetage (59) derrière lequel l'ergot d'encliquetage (38), disposé sur l'extrémité libre (29) de la deuxième demi-coque (21), est susceptible d'être encliqueté

10. Moteur électrique selon l'une des revendications précédentes, caractérisé en ce que l'attache de maintien (17) présente des éléments d'encliquetage rapportés par injection, pour assurer la fixation composants électriques tels que des résistances, des thermo-éléments, des câbles de liaison, etc.

## Claims

1. Electric motor with a holding device for the stator winding, wherein the holding device comprises a holding member which forms, encompasses and holds the winding overhang and wherein the holding member can be rigidly connected by latch means to the end face of the bundle of stator laminations, characterised in that the holding member consists of a holding clip (17) with two circular half-shells (19, 21), of which one end (23) of the first half-shell (19) can be rigidly latched by latch means to the end face (5, 7) of the bundle of stator laminations (3) and the other end (25) is connected by a film hinge (27) serving as a swivel pin to the second half-shell (21), and in that the free end (29) of the second half-shell (21) comprises latch means for latching to the first half-shell (19).

2. Electric motor according to claim 1, characterised in that the holding clip (17) consists of a plastic injection moulding and during manufacture comprises a connecting web (31) which keeps the two half-shells (19, 21) in an open position and which during assembly of the holding clip (17) is cut in or out by an automatic machine in such a way that the two half-shells (19, 21) can be brought into the latch position relative to each other.

3. Electric motor according to claim 2, characterised in that the connecting web (31) is of triangular construction.

4. Electric motor according to claim 1, 2 or 3, characterised in that the end (23) of the first half-shell (19), which can be connected to the end face (5, 7) of the bundle of stator laminations (3), comprises a fastening web (35) which can be inserted in the gap (33) between the end face (5, 7) of the bundle of stator laminations (3) and the winding overhangs (13, 15) and which comprises the latch means for fastening the holding clip (17) to the bundle of stator laminations (3) and for latching a latch lug (35) to the free end (29) of the second half-shell (21).

5. Electric motor according to claim 4, characterised in that the first half-shell (19) is slidable by an automatic machine by means of a sliding surface (37) on the fastening web (35) from the outside radially inwards on the end face (5, 7) of the bundle of stator laminations (3) into the latch position.

6. Electric motor according to claim 5, characterised in that the fastening web (35) comprises an end stop (39) which is arranged perpendicularly to the sliding surface (37) and by which the sliding movement of the holding clip (17) can be limited radially on the end face (5, 7) of the bundle of stator laminations (3).

7. Electric motor according to claim 5 or 6, characterised in that into the end face (5, 7) of the bundle of stator laminations (3) opens a latch opening (41) in which can be latched a latch projection (43) on the holding clip (17), which is arranged projecting from the sliding surface (37).

8. Electric motor according to any of the preceding claims, characterised in that the two half-shells (19, 21) on their inner circumferential surfaces (49, 51) which serve as clamping surfaces each comprise a projecting, peripheral ring surface (53, 55).

9. Electric motor according to any of the preceding claims, characterised in that the fastening web (35) on its side (57) facing towards the winding overhang (13, 15) comprises a latch hook (59) behind which can be latched the latch lug (38) arranged at the free end (29) of the second half-shell (21).

10. Electric motor according to any of the preceding claims, characterised in that the holding clip (17) comprises latch elements attached by injection moulding for fixing electrical components such as resistors, thermoelements, connecting cables, etc.
